(19) **Europäisches Patentamt**

**European Patent Office**

**Office européen des brevets**

(11) Veröffentlichungsnummer: **0 310 688**
**A1**

(12) # EUROPÄISCHE PATENTANMELDUNG

(21) Anmeldenummer: 87114477.0

(51) Int. Cl.⁴: **B60R 13/00 , B60Q 1/30**

(22) Anmeldetag: 05.10.87

(43) Veröffentlichungstag der Anmeldung:
**12.04.89 Patentblatt 89/15**

(84) Benannte Vertragsstaaten:
**DE ES FR GB IT SE**

(71) Anmelder: **Hella KG Hueck & Co.**
**Postfach 28 40**
**D-4780 Lippstadt(DE)**

(72) Erfinder: **Thiemann, Hubert**
**Loweg 6**
**D-4780 Lippstadt(DE)**

(54) **Heckblende für Kraftfahrzeuge.**

(57) Die Erfindung betrifft eine Heckblende für Kraftfahrzeuge, die zwischen den beiden Heckleuchten
an der Karosserie anbaubar ist. Die Heckblende besteht aus zwei ineinandergeschachtelten Schalen,
von denen die Außenschale aus einer strukturlosen,
transparenten Platte tiefgezogen ist. Die Innenschale
besteht aus opaken Material und ist ebenfalls tiefgezogen. Die beiden Schalen laufen in einem kleinen
Abstand äquidistant zueinander. Auf der Innenseite
der Innenschale ist eine den optischen Mitteln der
benachbarten Lichtscheibenabschnitten der Heckleuchte entsprechende Struktur aufgebracht, die in
einzelnen Bereichen unterschiedlich ist. In dem einen Bereich kann sie die Form von wabenförmigen
Linsen haben und in einem anderen Bereich die
Form der Tripel des Rückstrahlers.

FIG 1

EP 0 310 688 A1

## Heckblende für Kraftfahrzeuge

Die Erfindung betrifft eine Heckblende für Kraftfahrzeuge, die zwischen den beiden als Mehrkammerleuchten ausgebildeten Heckleuchten an der Karosserie anbaubar ist, bestehend aus einer transparenten farbigen Außenschale, die aus einer strukturlosen Platte im Tiefziehverfahren hergestellt ist und aus einer auf die Rückseite der Außenschale aufgebrachten lichtundurchlässigen reflektierenden und eine der Optik der Lichtscheibe der Heckleuchten entsprechende Struktur aufweisende hintere Abdeckung.

Bei einer bekannten, im Handel erhältlichen Heckblende dieser Art, besteht die hintere Abdeckung aus einer ebenen Platte, in die die Struktur durch Walzen eingebracht ist. Da die Bodenfläche der Außenschale stufig verläuft, ist die hintere Abdeckung mehrteilig ausgeführt. Diese Mehrteiligkeit der Abdeckung erfordert nicht nur mehrere Arbeitsgänge für ihre Verbindung mit der Außenschale, sondern sie gibt der Außenschale auch keine zusätzliche Steifigkeit. Außerdem ist die hintere Abdeckung auch nur mit einer einheitlichen Struktur für die gesamte Heckblende versehen, so daß z. B. keine Imitation der Optik für die Leuchten und zusätzlich für die Optik des Rückstrahlers vorgenommen wurde. Eine solche Trennung der hinteren Abdeckung ließe sich bei der bekannten Heckblende nur in dem Fall vornehmen, wenn die Außenschale auch in der Trennungsebene zwischen Rückstrahler und den benachbarten Leuchtenkammern eine Stufe aufweist. Dieses ist erforderlich, weil die hintere Abdeckung der Schale luftjedoch zumindest wasserdicht durchgeführt werden muß, da sich sonst zwischen der Außenschale und der hinteren Abdeckung Wasser ansammelt. Zumindest müßte man Vorkehrungen treffen, daß man die Verbindungsnaht der beiden Platten in diesem Bereich nicht sieht.

Aufgabe der Erfindung ist es, eine Heckblende der eingangs genannten Art derart zu verbessern, daß sie in einzelnen Abschnitten eine unterschiedliche Struktur aufweisen kann und trotz der relativ dünnen Außenschale eine hohe Verwindungssteifigkeit aufweist. Diese Aufgabe wird erfindungsgemäß durch die Anwendung folgender Merkmale gelöst:

a) die rückwärtige Abdeckung der Außenschale ist als Innenschale ausgeführt, die

b) dem Flächenverlauf der Außenschale in einem kleinen Abstand und zumindest auf dem größten Flächenanteil etwa äquidistant folgt,

c) die Innenschale ist im Tiefziehverfahren hergestellt,

d) die Struktur ist beim Tiefziehvorgang in die Innenschale eingebracht,

e) die Außenschale und die Innenschale sind an ihren umlaufenden Rändern miteinander verbunden.

Bei einer vorteilhaften Ausgestaltung der Erfindung entspricht die Struktur der den Heckleuchten benachbarten in Anbaulage vertikal und senkrecht zur Fahrtrichtung verlaufenden Bereiche der Innenschale den jeweiligen optischen Elementen der benachbarten Lichtscheibenabschnitte der Heckleuchte. Damit ergibt sich bei ausgeschalteten Leuchten der Eindruck, daß z. B. die Bremsleuchte und der Rückstrahler bis weit in die Heckblende hineinragt.

Damit sich eine hohe der Lichtscheibe der Heckleuchten entsprechende Brillanz ergibt, ist nach einem weiteren Merkmal der Erfindung die Innenschale auf ihrer Innenseite glänzend vorzugsweise silberfarbig lackiert oder aufgedampft.

Sind die innenliegenden Bereiche der Heckleuchte rot, so wird die Außenschale der Heckblende aus rotem Material gezogen, ist sie gelb, so wird gelbes Material verwendet. Weist die Heckleuchte auf der Innenseite sowohl eine rote als auch eine gelbe Farbe auf, so wird gelbes Material verwendet, welches in den Bereichen, die auf der Höhe des roten Anteils der Heckleuchte liegen rot lackiert wird. Liegt das farblose Fenster für das Rückfahrtlicht im Innenbereich der Heckleuchten, so wird die Außenschale aus einem farblosen Material hergestellt und parziell gelb und rot lackiert.

Um zu verhindern, daß sich zwischen der Innen- und Außenschale Kondenswasser ansammelt, werden diese beiden Schalen luftdicht miteinander verschweißt. Dazu ist es vorteilhaft, wenn die Durchgangslöcher zur Befestigung des Kennzeichenschildes in der Außenschale von einem nach innen vorspringenden Kragen umgeben sind, dessen Stirnfläche mit der Innenschale verschweißt ist.

Bei einer weiteren vorteilhaften Ausgestaltung der Erfindung sind die Innen- und Außenschalen mit ihren Außenrändern in dieselbe Richtung weisend ineinandergesetzt und mit ihren eng aneinanderliegenden Rändern verschweißt. Diese Ausgestaltung bringt nicht nur eine hohe Dichtigkeit zwischen den beiden Schalen, sondern gibt der Blende auch eine hohe Verbindungssteifigkeit.

Weiterhin ist es vorteilhaft, beim Ziehen der Innenschale auch die in Fahrtrichtung verlaufenden Flächenbereiche mit einer Struktur zu versehen. Diese Struktur entspricht vorteilhafterweise der Struktur der seitlichen Wandungsteile der Lichtscheibe der Heckleuchten.

Die Zeichnung veranschaulicht ein vorteilhaftes Ausführungsbeispiel der Erfindung und zwar zeigt

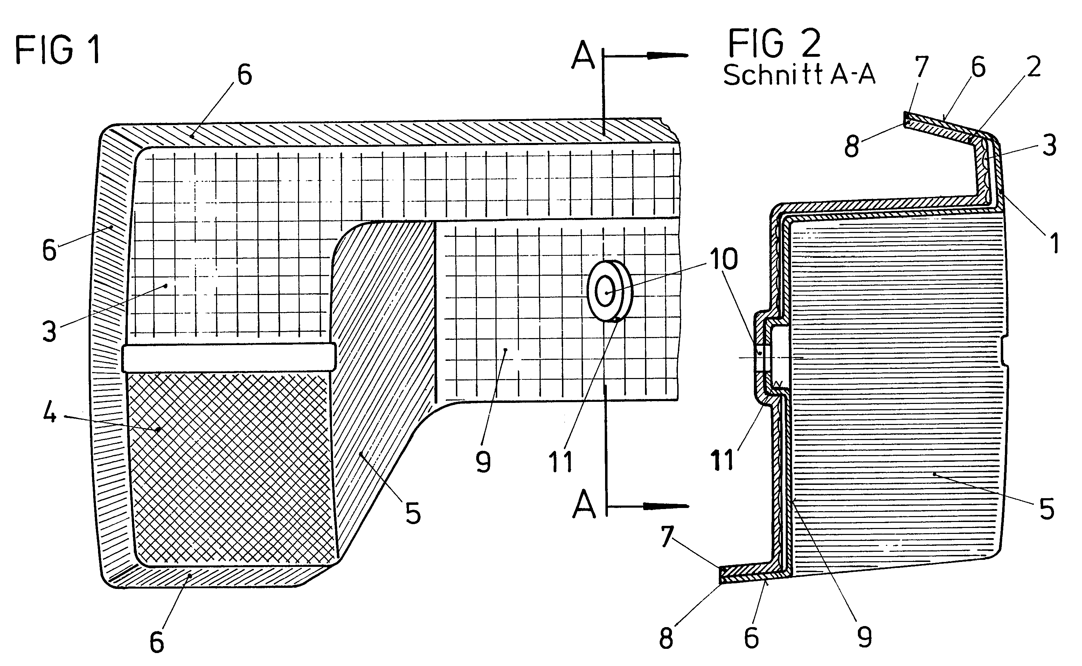

Figur 1 eine perspektivische Ansicht der Heckblende und

Figur 2 einen Schnitt nach der Linie A-A.

Die Heckblende besteht aus der Außenschale (1) und der Innenschale (2). Die Außenschale (1) ist aus einem transparenten Plattenmaterial tiefgezogen. Dabei hat das Plattenmaterial entweder bereits die gewünschte Signalfarbe, nämlich rot oder gelb oder es ist farblos und wird in den gewünschten Signalfarben lackiert.

Die Innenschale (2) ist aus einem opaken Plattenmaterial tiefgezogen und weist zumindest in etwa die gleiche Form auf, wie die Außenschale. Die Innenschale weißt auf ihrer Innenfläche eine Struktur auf, die in einzelnen Flächenbereichen unterschiedlich ist und in ihrer Form den optischen Elementen der den einzelnen Leuchtenkammern zugeordneten Lichtscheibenabschnitte entspricht. Dieses trifft sowohl für die Streulinsen der den Glühlampen vorgelagerten Lichtscheibenabschnitten als auch für die Rückstrahlertripel zu. So weist z. B. der Abschnitt 3 der Innenseite der Innenschale (2) die Struktur einer wabenförmig angeordneten Linsenoptik auf, während der Abschnitt 4 Rückstrahlertripel imitiert.

Die Stoßflächen (5) einer Stufe, sowie die zargenförmigen Ränder (6) der Blende weisen die Struktur der Außenränder der Leuchte auf. Diese Struktur ist gewöhnlich eine in Fahrtrichtung verlaufende Riffelung.

Diese unterschiedlich ausgeführte Strukturierung der Innenfläche der Innenschale wird beim Tiefziehvorgang, zumindest jedoch vor dem Erkalten der tiefgezogenen Innenschale eingebracht.

Die Innen- und Außenschalen sind so ineinandergestapelt, daß sie mit ihren Außenrändern (7, 8) in dieselbe Richtung weisen. Dabei liegen sie mit ihren Rändern (7, 8) eng aneinander, so daß die beiden Schalen (1, 2) leicht miteinander verschweißt werden können.

Im mittleren Bereich weist die Heckblende eine Vertiefung auf, auf deren Grundfläche (9) das Kennzeichenschild aufgesetzt wird. Zur Befestigung des Kennzeichenschildes weist die Heckblende in dieser Grundfläche (9) ein Durchgangsloch (10) für einen Schraubenbolzen auf. Die Durchgangslöcher (10) in der Außenschale (1) sind von einem Kragen (11) umgeben, der in Richtung auf die Innenschale (2) vorspringt und mit seiner Stirnseite auf der Innenschale (2) aufliegt. In diesen Berührungsflächen werden die Innenschale- und die Außenschale miteinander verschweißt.

## Ansprüche

1. Heckblende für Kraftfahrzeuge, die zwischen den beiden als Mehrkammerleuchten ausgebildeten Heckleuchten an der Karosserie anbaubar ist, bestehend aus einer transparenten farbigen Außenschale, die aus einer strukturlosen Platte im Tiefziehverfahren hergestellt ist und aus einer auf die Rückseite der Außenschale aufgebrachten lichtundurchlässigen reflektierenden und eine der Optik der Lichtscheibe der Heckleuchten entsprechende Struktur aufweisende hintere Abdeckung, gekennzeichnet durch folgende Merkmale:

a) Die rückwärtige Abdeckung der Außenschale (1) ist als Innenschale (2) ausgeführt, die

b) dem Flächenverlauf der Außenschale (1) in einem kleinen Abstand und zumindest auf dem größten Flächenanteil etwa äquidistant folgt,

c) die Innenschale (2) ist im Tiefziehverfahren hergestellt,

d) die Struktur (3, 4) ist beim Tiefziehvorgang in die Innenschale (2) eingebracht,

e) die Außenschale (1) und die Innenschalen (2) sind an ihren umlaufenden Rändern (7, 8) miteinander verbunden.

2. Heckblende nach Anspruch 1, dadurch gekennzeichnet, daß die Struktur (3, 4) der den Heckleuchten benachbarten in Anbaulage vertikal und senkrecht zur Fahrtrichtung verlaufenden Bereiche der Innenschale den jeweiligen optischen Elementen der benachbarten Lichtscheibenabschnitte der Heckleuchte entspricht.

3. Heckblende nach Anspruch 2, dadurch gekennzeichnet, daß die Struktur der in Fahrtrichtung verlaufenden Flächenbereiche (5, 6) der Innenschale (2) der Struktur der seitlichen Wandungsteile der Lichtscheibe der Heckleuchten entspricht.

4. Heckblende nach einem der vorstehenden Ansprüche, dadurch gekennzeichnet, daß die Innenschale (2) auf ihrer Innenseite vorzugsweise silberfarbig lackiert oder aufgedampft ist.

5. Heckblende nach einem der vorstehenden Ansprüche, dadurch gekennzeichnet, daß die transparente Außenschale (1) aus einem farblosen Material hergestellt und parziell rot und/oder gelb lackiert ist.

6. Heckblende nach einem der vorstehenden Ansprüche, dadurch gekennzeichnet, daß die Innenschale (2) und Außenschale (1) luftdicht miteinander verschweißt sind.

7. Heckblende nach Anspruch 6, dadurch gekennzeichnet, daß die Durchgangslöcher (10) zur Befestigung des Kennzeichenschildes in der Außenschale (1) von einem nach innen vorspringenden Kragen (11) umgeben sind, dessen Stirnfläche mit der Innenschale (2) verschweißt ist.

8. Heckblende nach Anspruch 7, dadurch gekennzeichnet, daß die Außenschale (1) und die Innenschale (2) mit ihren Außenrändern (7, 8) in dieselbe Richtung weisend ineinandergesetzt sind und mit ihren eng aneinanderliegenden Rändern verschweißt sind.

# FIG 1

# FIG 2
Schnitt A-A

EP 0 310 688 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 557 046  (SEIMA ITALIANA S.p.A.)<br>* Figuren 1,2,4 *<br>--- | 1 | B 60 R  13/00<br>B 60 Q   1/30 |
| A | PATENT ABSTRACTS OF JAPAN, Band 10, Nr. 138 (M-480)[2195], 21. Mai 1986; & JP-A-60 261 746 (HASHIMOTO FORMING KOGYO K.K.) 25-12-1985<br>* Insgesamt *<br>--- | 1 | |
| A | GB-A-2 166 578  (NISSAN MOTOR CO. LTD)<br>* Figuren 1,3 *<br>--- | 1 | |
| A | DE-A-1 239 580  (SWF-SPEZIALFABRIK FÜR AUTOZUBEHÖR GUSTAV RAU GmbH)<br>* Figur 1; Spalte 3, Zeilen 17-25 *<br>----- | 1,4,5 | |

**RECHERCHIERTE SACHGEBIETE (Int. Cl.4)**

B 60 R
B 60 Q

Der vorliegende Recherchenbericht wurde für alle Patentansprüche erstellt

| Recherchenort | Abschlußdatum der Recherche | Prüfer |
|---|---|---|
| DEN HAAG | 07-06-1988 | ONILLON C.G.A. |